Europäisches Patentamt

European Patent Office

Office européen des brevets

(19)

(11) Publication number: **0 010 884**
**B1**

(12) **EUROPEAN PATENT SPECIFICATION**

(45) Date of publication of patent specification: **29.09.82**

(51) Int. Cl.³: **G 03 B 15/05, H 05 B 41/32**

(21) Application number: **79302174.2**

(22) Date of filing: **10.10.79**

(54) **Electronic flash device.**

(30) Priority: **13.10.78 US 951120**

(43) Date of publication of application:
**14.05.80 Bulletin 80/10**

(45) Publication of the grant of the patent:
**29.09.82 Bulletin 82/39**

(84) Designated Contracting States:
**CH DE FR GB IT NL**

(56) References cited:
**DE - A - 2 024 222**
**DE - C - 873 358**
**US - A - 3 417 288**
**US - A - 3 475 651**
**US - A - 3 820 128**
**US - A - 4 064 519**
**US - A - 4 119 770**

(73) Proprietor: **POLAROID CORPORATION**
**549 Technology Square**
**Cambridge, Massachusetts 02139 (US)**

(72) Inventor: **Land, Edwin Herbert**
**163 Brattle Street**
**Cambridge, Massachusetts 02139 (US)**
Inventor: **Biber, Conrad Heinrich**
**120 Stratford Road**
**Needham, Massachusetts 02194 (US)**

(74) Representative: **Abbott, Leonard Charles et al,**
**GILL JENNINGS & EVERY 53/64 Chancery Lane**
**London WC2A 1HN (GB)**

Courier Press, Leamington Spa, England.

This invention relates to an electronic flash device suitable for use with photographic apparatus.

Electronic flash devices, or strobes, used for photographic purposes commonly utilize a low voltage battery together with a voltage converter circuit for charging a storage capacitor to a relatively high voltage suitable for discharge through a flash tube to provide an illuminating flash of light. The time required for the converter to charge the capacitor to the required voltage is generally a relatively long duration so that the photographer must first turn on a power control switch to energize the electronic flash device and then wait for the voltage converter to charge the storage capacitor to the required voltage before the camera can be actuated to provide a photographic exposure cycle. The photographer is generally made aware of when the electronic flash device reaches a satisfactory charge condition by a "ready" light which signals him that he may now proceed with the actual camera exposure. The time during which the photographer must wait for the electronic flash device to become fully charged prior to actuating the camera shutter button thus presents an obvious disadvantage to the electronic flash in comparison with an ordinary flash lamp.

In our copending European Patent Application 0 008 183, we have proposed a fast charging strobe which substantially shortens the period for which the photographer must wait for the electronic flash device to become fully charged. In the apparatus disclosed in the said copending application, the charging period is so short that the capacitor is fully charged in the brief time which elapses between the photographer's initiation of the photographic exposure and the commencement of the exposure interval.

An electronic flash unit according to the present invention, for connection to a battery, comprising a flash discharge tube and trigger circuit means responsive to an applied flash fire trigger signal for effecting an electrical discharge through the discharge tube, in which upon operation of the trigger circuit means current for the said discharge through the tube is derived directly from a battery connected to the flash unit and in which there is provided, in series with the flash discharge from the battery through the discharge tube, a device which is in a generally conductive state upon the triggering of the flash tube and which is rendered nonconductive after a delay to extinguish the flash, is characterized in that the said device is a gating means in the form of a MOSFET having drain and source terminals connected in series with the flash discharge tube and a gate terminal, and in that a gate control means is connected to the gate terminal, the gate control means, upon triggering of the flash tube, supplying a gating signal to the gate terminal to effect conduction between the drain and source terminals for a period of sufficient duration for the flash tube to provide a selected amount of artificial illumination.

Thus, a photographer using a flash unit according to the present invention is not required to switch power to a strobe voltage converter and wait for the strobe capacitor to become fully charged as a precondition to commencing the photographic operation; with the MOSFET in a conducting condition, he simply supplies a flash firing signal to the trigger circuit means. An electronic flash device according to the present invention does not need such a storage capacitor; it is ready to flash substantially from the instant that the photographer depresses a button to initiate a photographic cycle and is extinguished by the gate control means at the appropriate time.

A battery for use with the electronic flash unit is preferably of the flat multi-cell kind and preferably has an internal impedance of the order of 1 ohm. The internal impedance of the flash discharge tube is advantageously lower than that of the battery.

In order that the invention may be better understood, one example of apparatus embodying the invention will now be described with reference to the accompanying drawings, in which:— .

Figure 1 is a perspective view of the electronic flash device and camera arrangement of this invention; and

Figure 2 is a schematic diagram of the circuit for electronic flash device of Fig. 1.

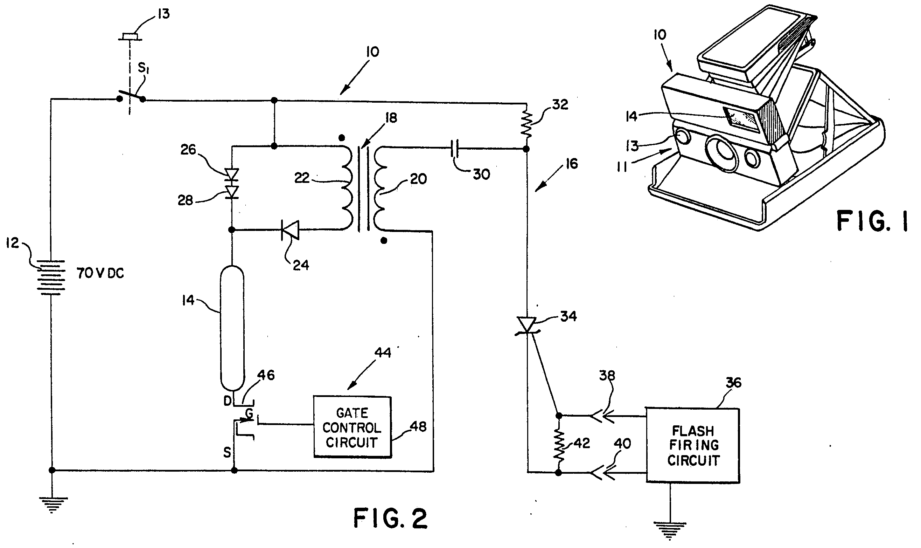

Figure 1 shows generally at 11 an automatic single lens reflex photographic camera. The camera illustrated has automated systems for controlling photographic exposures and processing operations in a manner described in U.S. Patents Nos. 3791278 and 3820128. The automatic exposure control systems described in these patents control an automatic exposure cycle in a well-known manner upon the manual actuation of a cycle-initiating button 13.

An electronic flash device or strobe embodying this invention is shown at 10 and may be formed either as an integral part of the camera 11 or as a detachable accessory. The electronic flash device 10 comprises an electronic firing circuit as shown schematically in Fig. 2. The circuit is powered by a steady state voltage source preferably comprising a flat multicell battery 12 characterised by a low internal impedance as well as a high current discharge rate.

The battery 12 preferably comprises a plurality of series-connected cells having a multiplicity of electrically conductive layers which include, for each cell, a positive electrode layer, a negative electrode layer, and an electrolyte-containing layer disposed between and separating the positive and negative electrodes. Adjacent cells of the battery may be connected electrically one to the other by means of an electrolyte impervious intercell connector layer which is disposed between and in contacting relationship with each pair of adjacent cells. The flat multicell battery may thus be provided with a low internal impedance as well as a capability for a high discharge rate.

The battery 12 is preferably manufactured in accordance with the teaching of U.S. Patent No. 4119770 and comprises multiple serially stacked flat cells providing an output steady state voltage of 70 VDC with an internal impedance in the order of 1 ohm.

The battery 12 is connected directly, preferably by way of a switch $S_1$, to discharge through a flash discharge tube 14 to provide an illuminating flash of light upon the triggering of the flash tube by a series trigger circuit 16. The flash discharge tube 14 has a relatively low internal impedance, preferably below the internal impedance of the battery. The switch $S_1$ is preferably closed in synchronism with the actuation of a photographic cycle initiating button 13 but may be closed independently of button 13. The trigger circuit 16 comprises a pulse transformer 18 having primary and secondary windings 20 and 22. The secondary winding 22 is preferably connected in series to a decoupling diode 24. The secondary winding 22 and diode 24 are shunted by two serially connected diodes 26 and 28 to define a trigger pulse circuit connected in serial relation to the flash discharge tube 14. Each diode 26 and 28, preferably has a peak inverse voltage characteristic of 1,500 V for reasons which will become apparent.

The primary winding 20 is grounded at one end with the other end connected in serial relation to a capacitor 30 which, in turn, is connected to the battery 12 through a resistor 32. The junction between the capacitor 30 and the resistor 32 is connected to the anode of an SCR 34. The cathode of the SCR 34 is connected to a flash firing circuit 36 by way of a terminal 40. The flash firing circuit 36 is preferably part of an exposure control system of the camera 11 and is described in U.S. Patent No. 3820128. The gate of the SCR 34 is also connected to the flash firing circuit 36 by way of another terminal 38 to receive a flash fire signal at the appropriate moment during an exposure interval as described in U.S. Patent No. 3820128.

Where the electronic flash device 10 is detachable from the automatic camera 11 there may be provided a resistor 42, between the gate and cathode of the SCR 34, having an impedance selected to correspond with the impedance value of an unfired flash lamp for reasons described in U.S. Patent No. 3858227. Alternatively, it may be desirable to provide a voltage monitoring circuit for monitoring the steady state voltage of the battery 12, and to provide a signal to the terminals 38 and 40 to enable the camera exposure control system, by way of the flash firing circuit 36, to execute an automatic exposure cycle only if the battery output voltage is above a minimum value described in U.S. Patent No. 4 064 519.

A gating circuit 44 is connected in series with the flash discharge tube 14 to control the duration of the discharge from the battery 12 through the discharge tube 14. The gating circuit 44 is in a conductive state upon the triggering of the flash tube 14 and switches to a nonconductive state after a time sufficient for the flash tube 14 to provide a selected amount of exposure-influencing artificial illumination.

The gating circuit 44 preferably comprises a VMOS Power FET having drain (D) and source (S) terminals connected in series with the flash discharge tube 14, and a gate (G) terminal connected to a gate control circuit 48 for providing a gating signal to the gate terminal to effect conduction between the drain (D) and source (S) terminals. The gate control circuit may comprise a scene light detecting and integrating circuit of the type described in U.S. Patent No. 4 008 481. The scene light detecting and integrating circuit may be integral either with the flash device 10 or with the camera 11 and it operates to switch off the gating signal to the gate (G) terminal to effect a nonconductive condition between the drain (D) and source (S) terminals upon detection and integration of a sufficient amount of incident scene light to effect a selected exposure. Alternatively, the gate control circuit 48 may comprise an ordinary timing circuit to effect a flash discharge of a predetermined duration.

In order to commence an electronic flash illuminated photographic exposure cycle, the photographer actuates the button 13 which immediately closes the switch $S_1$ and commences the automatic exposure cycle of the camera in the manner disclosed in U.S. Patent No. 3 820 128, while simultaneously connecting the 70 VDC output of the battery 12 across the trigger circuit 16 and flash tube 14. In this manner, the electronic flash device 10 is automatically made ready for firing.

Subsequent to the commencement of the exposure interval, the flash fire circuit 36 provides a gating pulse in a manner disclosed in U.S. Patent No. 3820128, to gate the SCR 34 into conduction. Closure of the switch $S_1$ also charges the capacitor 30 to 70 VDC prior to the gating of the SCR 34 into conduction. Thus, gating the SCR 34 into conduction operates to ground its anode terminal and thereby apply a triggering pulse to the primary winding 20 of the transformer 18. The triggering pulse, in turn, is stepped up by the transformer 18 to a peak voltage in the order 3 KV which pulse is then applied by way of the decoupling diode 24 to trigger the flash tube 14 into conduction. Once conducting, the discharge current through the flash tube 14 is provided directly from the battery 12 by way of the shunting diodes 26 and 28. The primary winding 20 is phased with respect to the secondary winding 22 to apply a triggering pulse to the discharge tube 14 of opposite polarity to that of the battery 12 discharge through the flash tube 14. Thus, the triggering pulse provided by the transformer 18 is of opposite polarity to that of the discharge current from the battery 12 through the shunting diodes 26 and 28 as is described in U.S. Patent No. 3475651.

In this manner, the flash tube 14 is triggered to draw current from the battery 12 at an appropriate instant during the photographic exposure interval to provide an illuminating flash of light.

The gate circuit 44 thereafter operates in the foregoing manner, subsequent to the detection and integration of a sufficient amount of incident scene light to effect a selected exposure, to switch off the gating signal to the gate terminal (G) and thereby to render the VMOS Power FET 46 nonconductive. Because of the relatively high internal impedance of the battery 12, as compared to the flash tube 14, flash discharge times in the order of 10—20 millisec., are required to provide useful light outputs. Batteries of the aforementioned type have been found capable of providing multiple flashes in the above-mentioned manner without suffering significant loss in steady state output voltage level.

**Claims**

1. An electronic flash unit, for connection to a battery, comprising a flash discharge tube and trigger circuit means responsive to an applied flash fire trigger signal for effecting an electrical discharge through the discharge tube, in which upon operation of the trigger circuit means (34, 36) current for the said discharge through the tube (14) is derived directly from a battery (12) connected to the flash unit and in which there is provided, in series with the flash discharge from the battery through the discharge tube, a device (46) which is in a generally conductive state upon the triggering of the flash tube and which is rendered nonconductive after a delay to extinguish the flash, characterized in that the said device is a gating means in the form of a MOSFET (46) having drain and source terminals (D and S) connected in series with the flash discharge tube and a gate terminal (G), and in that a gate control means (48) is connected to the gate terminal; the gate control means, upon triggering of the flash tube, supplying a gating signal to the gate terminal to effect conduction between the drain and source terminals for a period of sufficient duration for the flash tube to provide a selected amount of artificial illumination.

2. An electronic flash unit according to claim 1, characterized in that the gate control means comprises a scene light detecting and integrating circuit which, upon detection and integration of a selected amount of incident scene light, removes the gating signal from the gate terminal to effect a nonconductive condition between the drain and source terminals.

3. An electronic flash unit according to claim 1 or 2, characterized in that the trigger circuit means includes a transformer (18) having a primary winding (20) connected to receive an input voltage pulse responsive to the flash fire trigger signal and a secondary winding (22) connected in series with the flash discharge tube (14) having a phase relationship with respect to the primary winding so as to apply a triggering pulse to the discharge tube of opposite polarity to that of the battery discharge through the flash tube, the trigger circuit means additionally including at least one diode (26, 28) connected in parallel with the secondary winding such that the triggering pulse operates to reverse bias the diode while the discharge through the flash tube operates to forward bias the diode.

4. An electronic flash unit according to any one of the preceding claims in combination with a battery, characterised in that the battery is a flat multicell battery.

5. An electronic flash unit according to any one of claims 1 to 3 in combination with a battery, characterized in that the battery has an internal impedance in the order of 1 ohm.

6. An electronic flash unit and battery according to claim 4 or 5, characterised in that the internal impedance of the flash discharge tube is lower than the internal impedance of the battery.

**Patentansprüche**

1. Elektronenblitzgerät zum Anschluß an eine Batterie mit einer Blitzentladungsröhre und einer Triggerschaltung, die auf ein angelegtes Blitzzünd-Triggersignal anspricht um eine elektrische Entladung über die Entladungsröhre zu bewirken, bei welchem Blitzgerät bei Betätigung der Triggerschaltung (34, 36) Strom für die Entladung durch die Röhre (14) direkt von der Batterie (12) abgezogen wird, die mit dem Blitzgerät verbunden ist und bei welchem in Reihe mit der Blitzentladung von der Batterie über die Entladungsröhre ein Schaltungselement (46) vorgesehen ist, welches nach Triggerung der Blitzröhre in einem allgemein leitfähigen Zustand befindlich ist und in den nicht leitenden Zustand nach einer Verzögerung umgeschaltet wird, um den Blitz zu löschen, dadurch gekennzeichnet, daß das Schaltungselement ein Torschaltelement in Form eines MOSFET (46) ist, dessen Drain- und Source-Anschlüsse (D und S) in Reihe mit der Blitzentladungsröhre und mit einem Gatteranschluß (G) geschaltet sind, und daß ein Gattersteuerkreis (48) mit dem Gatteranschluß verbunden ist, wobei der Gattersteuerkreis nach Triggerung der Blitzröhre ein Austastsignal dem Gatteranschluß liefert, um eine leitende Verbindung zwischen dem Drain-Anschluß und dem Source-Anschluß während einer Periode herzustellen, die so lang ist, daß die Blitzröhre eine vorgewählte Lichtmenge abstrahlen kann.

2. Elektronenblitzgerät nach Anspruch 1, dadurch gekennzeichnet, daß der Gattersteuerkreis eine Szenenlichtdetektor- und Integrationsschaltung aufweist, die nach Aufnahme und Integration einer vorgewählten Menge einfallenden Szenenlichts das Austastsignal vom Gatter-Anschluß entfernt, um zwischen dem Drain- und dem Source-Anschluß einen Sperrzustand herbeizuführen.

3. Elektronenblitzgerät nach Anspruch 1 oder 2, dadurch gekennzeichnet, daß die Triggerschaltung einen Transformator (18) aufweist, dessen Primärwicklung (20) einen Eingangsspannungsimpuls empfängt, der auf das Blitzzünd-Triggersignal anspricht, daß eine Sekundärwicklung (22) des Transformators in Reihe mit der Blitzentladungsröhre (14) geschaltet ist und eine solche Phasenbeziehung zur Primärwicklung aufweist, daß ein Triggerimpuls der Entladungsröhre zugeführt wird, der eine Polarität besitzt, die der Polarität der Batterieentladung über die Blitzröhre entgegengesetzt gerichtet ist, und daß die Triggerschaltung zusätzlich wenigstens eine Diode (26, 28) aufweist, die parallel zu der Sekundärwicklung geschaltet ist, derart, daß der Triggerimpuls die Vorspannung der Diode umkehrt, während die Entladung durch die Blitzröhre eine Vorwärtsvorspannung der Diode bewirkt.

4. Elektronenblitzgerät nach einem der vorhergehenden Ansprüche in Kombination mit einer Batterie, dadurch gekennzeichnet, daß die Batterie eine flache Mehrzellen-Batterie ist.

5. Elektronenblitzgerät nach einem der Ansprüche 1 bis 3 in Kombination mit einer Batterie, dadurch gekennzeichnet, daß die Batterie einen Innenwiderstand in der Größenordnung von 1 Ohm aufweist.

6. Elektronenblitzgerät und Batterie gemäß Anspruch 4 oder 5, dadurch gekennzeichnet, daß der Innenwiderstand der Blitzentladungsröhre kleiner ist als der Innenwiderstand der Batterie.

## Revendications

1. Unité de flash électronique susceptible d'être reliée à une pile, comprenant un tube flash à décharge et un circuit de déclenchement répondant à un signal de déclenchement d'amorçage de flash appliqué pour effectuer une décharge électrique à travers le tube à décharge dans lequel, lors de l'actionnement du circuit de déclenchement (34, 36), un courant pour ladite décharge à travers le tube (14) est tiré directement d'une pile (12) reliée à l'unité de flash et dans lequel il est prévu en série avec la décharge de flash depuis la pile à travers le tube de décharge un dispositif (46) qui est dans un état généralement conducteur lors du déclenchement du tube de flash et qui est rendu non conducteur après un retard pour éteindre le flash, caractérisé par le fait que le dispositif est une porte se présentant sous la forme d'un transistor à effet de champ MOS (MOSFET) (46) possédant des bornes de drain et de source (D, S) reliées en série avec le tube à décharge de flash et une borne de porte (G) et en ce que des moyens de commande de porte (48) sont reliées à la borne de porte, les moyens de commande de porte, lors du déclenchement du tube de flash, fournissant un signal de porte à la borne de porte pour permettre une conduction entre les bornes de drain et de source pendant une période de durée suffisante pour que le tube de flash fournisse une quantité choisie d'éclairage artificiel.

2. Unité de flash électronique selon la revendication 1, caractérisée par le fait que les moyens de commande de porte comprennent un circuit de détection et d'intégration de lumière de la scène qui, lors de la détection et de l'intégration d'une quantité choisie de lumière de la scène incidente, supprime le signal de porte de la borne de porte pour réaliser un état non-conducteur entre les bornes de drain et de source.

3. Unité de flash électronique selon l'une quelconque des revendications 1 et 2, caractérisée par le fait que le circuit de déclenchement comprend un transformateur 18 possédant un enroulement primaire 20 connecté pour recevoir une impulsion de tension d'entrée en réponse au signal de déclenchement d'amorçage de flash et un enroulement secondaire 22 connecté en série avec le tube à décharge de flash 14 possédant une relation de phase par rapport à l'enroulement primaire de façon à appliquer une impulsion de déclenchement au tube à décharge de polarité opposée à celle de la décharge de la pile dans le tube de flash, le circuit de déclenchement comprenant en outre au moins une diode 26, 28, reliée en parallèle avec l'enroulement secondaire de sorte que l'impulsion de déclenchement provoque une polarisation inverse de la diode alors que la décharge à travers le tube de flash provoque une polarisation directe de la diode.

4. Unité de flash électronique selon l'une quelconque des revendications précédentes, en combinaison avec une pile caractérisée par le fait que la pile est une pile plate multicellulaire.

5. Unité de flash électronique selon l'une quelconque des revendications 1 à 3 en combinaison avec une pile, caractérisée par le fait que la pile a une impédance interne de l'ordre de 1 ohm.

6. Unité de flash électronique et pile selon l'une quelconque des revendications 4 et 5, caractérisées par le fait que l'impédance interne du tube à décharge de flash est inférieure à l'impédance interne de la pile.

FIG. I

FIG. 2

0010884